# EUROPEAN PATENT SPECIFICATION

(11) **EP 3 356 568 B1**
(45) Date of publication and mention of the grant of the patent: **18.09.2019**
(21) Application number: 15790308.9
(22) Date of filing: 30.09.2015
(51) Int. Cl.: C22B 7/00, B22F 1/00, B22F 9/24, C22B 3/00

(54) **PROCESS FOR THE PRODUCTION OF METALLIC GOLD NANOPARTICLES FROM AN EFFLUENT ARISING FROM ACID MINE DRANAIGE BIOREMEDIATION**
VERFAHREN ZUR HERSTELLUNG VON METALLISCHEN GOLDNANOPARTIKELN AUS EINEM ABWASSER, DAS BEI DER BIOSANIERUNG SAURER GRUBENENTWÄSSERUNG ENTSTEHT
PROCÉDÉ POUR LA PRODUCTION DE NANOPARTICULES D'OR MÉTALLIQUE À PARTIR D'UN EFFLUENT PROVENANT DE LA BIORÉHABILITATION DE DRAINAGES MINIERS ACIDES

(43) Date of publication of application: 08.08.2018
(73) Proprietor: Universidade do Algarve, 8005-139 Faro (PT); CCMAR - Centro de Ciências do Mar, 8005-139 Faro (PT)
(72) Inventor: MARIA CLARA, Silva Costa, 8005-194 Faro (PT); ANA FILIPA, Benedito Assunção, 8300-131 Silves (PT)
(74) Representative: Oliveira Lourenço, Nuno Miguel
(86) International application number: PCT/PT2015/050009
(87) International publication number: WO 2017/058038

(56) References cited:
- G. VITOR ET AL: "Start-up, adjustment and long-term performance of a two-stage bioremediation process, treating real acid mine drainage, coupled with biosynthesis of ZnS nanoparticles and ZnS/TiO2 nanocomposites", MINERALS ENGINEERING., vol. 75, 8 January 2015 (2015-01-08), pages 85-93, XP055274314, GB ISSN: 0892-6875, DOI: 10.1016/j.mineng.2014.12.003 cited in the application
- FANG CAI ET AL: "Biosynthesis of gold nanoparticles by biosorption usingMSR-1", CHEMICAL ENGINEERING JOURNAL, ELSEVIER SEQUOIA, LAUSANNE, CH, vol. 175, 7 September 2011 (2011-09-07), pages 70-75, XP028105835, ISSN: 1385-8947, DOI: 10.1016/J.CEJ.2011.09.041 [retrieved on 2011-09-16] cited in the application
- COSTA M C ET AL: "Bioremediation of Acid Mine Drainage Using Acidic Soil and Organic Wastes for Promoting Sulphate-Reducing Bacteria Activity on a Column Reactor", WATER, AIR, AND SOIL POLLUTION, KLUWER ACADEMIC PUBLISHERS, DO, vol. 165, no. 1-4, 1 July 2005 (2005-07-01), pages 325-345, XP019271129, ISSN: 1573-2932 cited in the application

## Description

### Technical Domain

The present request describes a process to obtain metallic gold (Au(0)) nanoparticles (NPs) which consists in the use of an effluent containing sulfide from a bioremediation process of acid mine drainage (AMD) based on the use of sulfate-reducing bacteria (SRB). This effluent will be called "bioreactor's effluent". This process consists in the reduction of gold(III) present in a solution containing concentrations between 20-250 mg/L of this ion and leads to the recovery of this precious metal as Au(0) NPs.

### Background

Precious metals, such as gold (Au), have been subject of several studies, since they are economically important, not only historically as currency but also as investment goods. Thus, and due to the limited availability of the precious metals, their recovery from aqueous solutions, namely solutions resulting from the leaching of wastes is economically attractive (Das, 2010). Moreover, their recovery as nanoparticles is particularly interesting and advantageous, given their extensive applications resulting from specific properties determined the nanometric size. The gold nanoparticles have wide application, particularly in DNA recognition, in hereditary medicine, in hyperthermia of tumor, optical coatings, scanning tunneling microscopes as conductive tips, as well as in catalysis (Cai et al., 2011; Shankar et al., 2005). The conventional physical and chemical methods used in the synthesis of gold nanoparticles are frequently toxic to the environment due to the use of toxic chemicals and reagents, or due to the use of extreme temperature and pressure conditions, which makes the processes more complex and expensive. Therefore, the interest in developing "green" technologies for the synthesis of gold nanoparticles has increased.

Thus, many biological systems have been investigated aiming the biosynthesis of gold nanoparticles, including systems based on the use of fungi (Bhainsa and Souza, 2006; Senapati et al., 2005; Ahmad et al., 2003), algae (Singaravelu et al., 2007; Mata et al., 2009), bacteria (He et al., 2007; Shahverdi et al., 2007) and plants (Sathishkumar et al., 2009a; Sathishkumar et al., 2009b; Shankar et al., 2003). This synthesis may occur intracellularly or extracellularly, being the extracellular synthesis preferable, since it makes the downstream process more simple, efficient and consequently less expensive, aiming the applications of the obtained particles.

The biosynthesis of metal nanoparticles is usually high selective and can operate at room temperature and pressure, without requiring reagents addition (Cai et al., 2011).

Recently, Vitor and colleagues (2015) have used an effluent containing sulfide, resulting from a bioremediation process of Acid Mine Drainage (AMD), for the synthesis of metal sulfide NPs and nanocomposites, namely, ZnS and ZnS/TiO₂ nanocomposite. The bioremediation process was previously developed to treat a real AMD, whose pH varies between 2.0 and 2.5 and containing high sulfate ion concentrations (≥ 2g/l) and metals, mainly, iron, copper and zinc. This process is composed by a bioreactor inoculated with a sulfate-reducing bacteria (SRB) community, previously enriched from sludge from a wastewater treatment plant. The process has the ability to treat AMD, producing a treated effluent containing an excess of biologically generated sulfide, that has been successfully used in the synthesis of metal sulfide NPs and respective nanocomposites.

Acid Mine Drainage, designated AMD, became an environmental problem of great importance in Europe, particularly in Portugal and Spain, where there are numerous abandoned mines located in the Iberian Pyrite Belt (Martins et al, 2010). AMD is the result of the exposure of sulfide minerals to erosive agents (air and rain), causing the accumulation of water with very low pH and high concentrations of sulfate and metals.

The traditional processes for AMD remediation, based on chemical neutralization and hydroxides precipitation, have some disadvantages, such as, high cost, low efficiency in sulfate's removal and the formation of large sludge volumes, which require a process for disposal (Chatterjee and Dasgupta, 2005). Alternatively, bioremediation processes based on the use of SRB have been developed (Costa and Duarte, 2005; Diels et al., 2002; U.S. Pat. n° 6,852,305). SRB are anaerobic bacteria with ability to oxidize simple organic compounds, using sulfate as an electron acceptor reducing it to sulfide (Postgate, 1981). The contact of the dissolved metal ions, for example, iron, copper and zinc, with the biological generated sulfide causes the precipitation of metals as metal sulfides (Bratcova et al, 2002; Costa and Duarte, 2005; Cabrera et al., 2006; Vitor et al., 2015).

The disclosed in the present request, combines an AMD bioremediation process, in which a treated effluent, containing excess sulfide is produced, with the production of metallic gold nanoparticles, without the need of reagents addition and/or the use of extreme temperature and pressure conditions. For this purpose, the effluent used for the synthesis of gold nanoparticles (Au(0)) is the effluent resulting from the AMD bioremediation process, based on the activity of sulfate-reducing bacteria described by Victor and colleagues (2015).

The process described in this patent request allows to overcome the disadvantages described above for chemical and biological processes of synthesis and it is a viable alternative to obtain gold nanoparticles with low cost, at room temperature and atmospheric pressure.

### Summary

The present request describes a bioremediation process for Acid Mine Drainage (AMD) treatment, based on the activity of sulfate-reducing bacteria (SRB), from which a sulfide-rich effluent called "bioreactor's effluent", is produced and used for the reduction of gold(III) in aqueous solution, allowing the recovery of Au(0), as nanoparticles (NPs).

The present request describes how the "bioreactor's effluent" can be used for gold(III) reduction in aqueous solution for the recovery of this precious metal as Au(0) NPs.
The bioreactor consists of a column containing gravel as filling material that was previously inoculated with sulfate-reducing bacteria (SRB). This bioreactor operates continuously and in "up-flow" enabling efficient AMD treatment, thus producing a treated effluent. This effluent has the ability to reduce almost instantaneously gold(III)in aqueous solutions and depending on the process used (*batch* or continuous), yields of gold removal in a range of 70-100% are obtained from 100-250 mg/L gold(III) solution. Thus, it is possible to recover gold from an aqueous solution as Au(0) NPs.

The low cost of this effluent (since it results from an AMD treatment process) contributes to the low cost of the gold(III) removal process described herein. Furthermore, gold recovery is possible as Au(0) NPs, with several applications described in the literature, making this an attractive process from an economic point of view.

Hence, a process for the production of metallic gold nanoparticles (NPs) using a sulfide-rich effluent from the bioremediation of acid mine drainage (AMD) with sulfate-reducing bacteria (SRB), comprising the following steps, is described:
- effluent's filtration with a 0.22 µm filter;
- effluent's addition, drop by drop and under stirring, to an Au(III) aqueous solution with a concentration of 20-250 mg/L;
- Removal of Au(0) NPs as a precipitate, followed by washing and drying.

In an embodiment, an aqueous solution containing 20-250 mg/L of Au(III) is added drop by drop and under stirring to the effluent.

In other embodiment, the effluent's addition to the aqueous solution containing Au(III) or the addition of the solution containing Au(III) to the effluent occurs in *batch* or in continuous.

In other embodiment the process for the production of metallic gold nanoparticles is coupled to the bioremediation process, and the bioreactor effluent is added drop by drop at a constant flow to the aqueous solution containing Au(III) that is under stirring placed in a reactor downstream to the bioremediation process.

In an additional embodiment the effluent is added to the Au(III) aqueous solution or the Au(III) aqueous solution is added to the effluent, until an excess of sulfide, in comparison to the metal ion, can be enough to guarantee complete reduction of Au(III) to Au(0).

### Figures description

For an easier understanding of the present request figures are attached, which represent preferred embodiments that, however, are not intended to limit the subject matter disclosed herein.
Figure 1 illustrates a process to obtain gold nanoparticles, in *batch* (n°1) and in continuous (n°2), using the sulfide-rich effluent resulting from an AMD bioremediation process based on the use of SRB.
Figure 2 illustrates the evolution of sulfide (black square) and gold (gray square) concentrations present in the mixture of the *batch* assay (8 days) after the addition, drop by drop and under stirring, of the bioreactor's effluent to the Au(III) solution.
Figure 3 represents the X-ray Diffraction (XRD) pattern of the particles obtained in *batch* assays. The diffraction peaks are consistent with the presence of Au(0) with cubic structure (JCPDS #01-071-4615).
Figure 4 are Transmission Electron Microscopy (TEM) images (A, B and C) of the particles obtained in the *batch* assays.
Figure 5 shows the spectrum resulting from the Energy Dispersive X-ray (EDX) system associated to TEM, of the particles obtained in *batch.* These particles are those that were observed by TEM in Figure 4 (A, B and C).
Figure 6 represents the XRD pattern obtained by X-ray Diffraction (XRD) of the particles obtained in the continuous system. The diffraction peaks are all consistent with the presence of Au(0), with a cubic structure (JCPDS #01-071-4615).
Figure 7 are Transmission Electron Microscopy (TEM) images of the particles obtained in continuous (A, B and C) and a Selected Area Electron Diffraction (SAED) image (D) of the same particles.
Figure 8 shows the Energy Dispersive X-ray (EDX) spectrum associated to TEM of the particles obtained in the continuous assay. These particles are those that were observed by TEM in Figure 7 (A, B and C).

### Detailed description

The present request describes a process to obtain Au(0) nanoparticles (NPs) using an effluent containing sulfide from the biological treatment of acid mine drainage (AMD), which will be called "bioreactor's effluent", using an aqueous solution whose Au(III) concentration varies between 20 and 250 mg/L.

The biological removal and recovery process described in the present request is suitable to reduce Au(III) in an aqueous solution and recover it as Au(0) NPs for subsequent applications.

The bioreactor's effluent has a low economic value and this process is also a way to apply and thus to valorize it, without requiring great intervention or adjustments before its use. The use of this effluent to obtain Au(0) NPs by reduction of Au(III) in aqueous solution has never, to our knowledge, been disclosed before.

The contact of the bioreactor's effluent with a gold(III) solution results in reduction and thus, in the production of Au(0) NPs. The bioreactor's effluent is filtered with a 0,22µm filter to ensure the separation of possible solid particles entrained in effluent and that may decrease the purity of the obtained particles. The addition sequence makes no difference. Hence, the gold(III) solution may be added to the effluent or the effluent can be added to the gold(III) solution. This addition is carried out drop by drop with stirring. As the effluent comes into contact with the gold(III) solution, gold(III) is reduced and consequently precipitate (forming a brown precipitate).

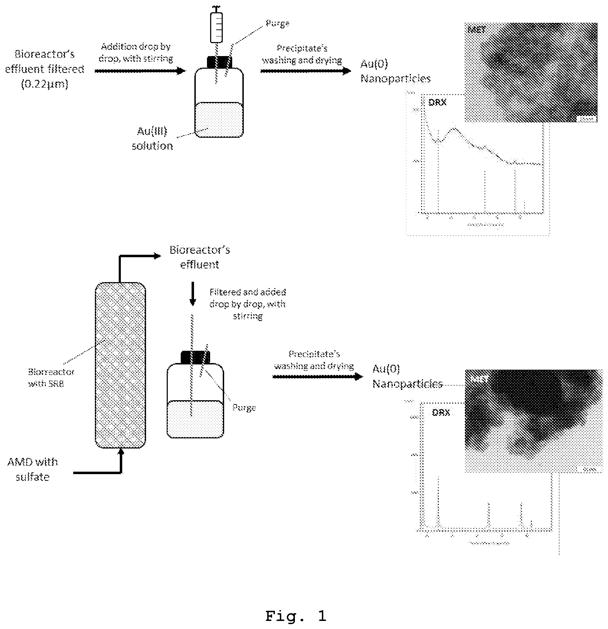

Gold removal and recovery from aqueous solution using the effluent from an AMD bioremediation process may be performed by two methods: in *batch* (n°1, figure 1) or in continuous (n°2, figure 1).

The effluent used in both processes, *batch* and continuous, have a pH ranging between 6.4 and 8.1 and a sulfide concentration of 160-400 mg/L.

### Examples

### Example 1: Batch system

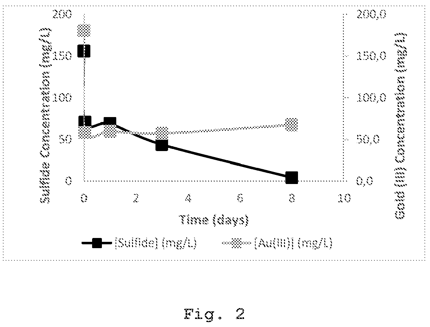

Figure 2 shows sulfide (black square) and Au(III) concentrations (gray square) in the mixture of the bioreactor's effluent containing sulfide, and the Au(III) solution with a concentration of 250 mg/L, in a 120 mL flask during the *batch* assay (8 days). The addition is performed drop by drop with simultaneous stirring in a sealed *batch* but with a purge. The volume of bioreactor's effluent added is selected in order to have a molar ratio between sulfide and Au(III) of 1.5. The mixture remained in sealed *batch* for 1 week, while samples were periodically collected for analysis of pH, redox potential, sulfate, sulfide and gold(III) concentrations in solution. As soon as the addition of the bioreactor's effluent to gold(III) solution occurs, the Au(III) concentration, in solution, decreases which is consistent with its reduction and subsequent removal from the solution. The sulfide concentration also decreases, which may be due to its role as Au(III)-reducing agent. An increase in redox potential and the pH maintenance of the mixture (5.50 ± 0.02) was also observed. Thereafter, gold(III) concentrations remained constant, while sulfide concentration continued to decrease and a slight increase in the redox potential was observed. The gold(III) removal percentage was about 68%, corresponding to 122 mg/L of gold. This assay demonstrates the almost instantaneous ability of the bioreactor's effluent to remove Au(III) from solution. The sulfide content present in the solution also decreases very quickly. After a few minutes of contact, the sulfide concentration decreases to less than half of the initial value (figure 2), reaching values very close to zero (4 mg/L) after 1 week. This result is also an advantageous since sulfide is highly toxic, flammable and irritating.

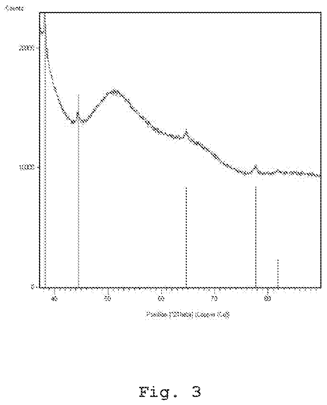

The precipitate was washed and dried and then analyzed by X-ray Diffraction (XRD) and Transmission Electron Microscopy coupled to an Energy Dispersive X-ray detector (TEM-EDX). In the obtained XRD diffractogram, figure 3, the peaks are consistent with the presence of Au(0) with a cubic structure (JCPDS #01-071-4615).

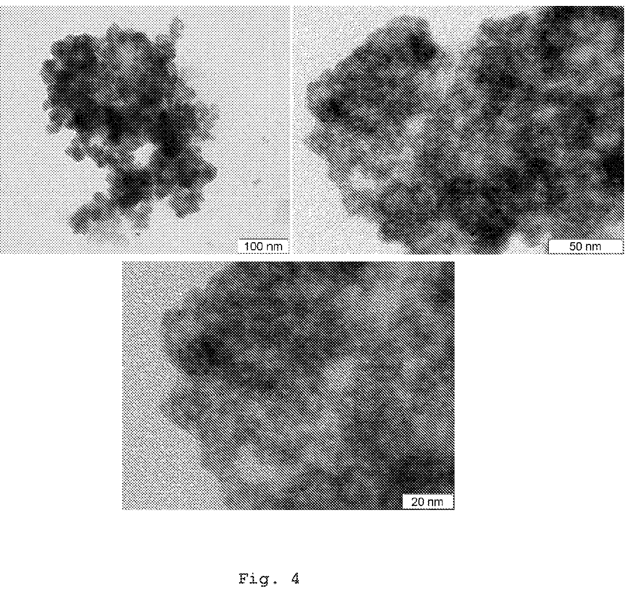

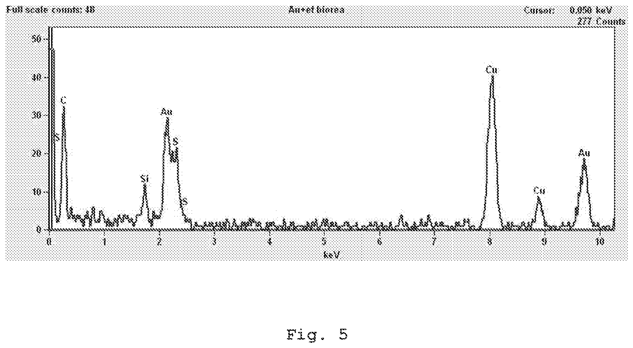

The results of TEM analysis, figure 4, confirm the spherical particles morphology and show that these particles are agglomerated. The particles have sizes equal to or less than 2.5 nm, confirming the formation of Au(0) NPs. The EDX analysis, figure 5, allowed to identify gold, which is also consistent with the presence of Au(0) particles. Other elements were also identified, namely S, probably resultant from the excess of sulfide in the effluent, and Cu from the supporting grid. Silicon was also identified and it may be due to some contamination from the use of glass material.

This assay demonstrates the ability of the bioreactor's effluent to precipitate a Au(III) solution, as Au(0) nanoparticles, in a *batch* process.

### Example 2: Continuous system

In this system the bioreactor's effluent was added in continue to the gold(III) solutions with Au(III) concentrations of 100 mg/L and 200 mg/L. Thus, as the effluent leaves the bioreactor at a flow rate of 2.5 and 5.0 mL/h, it passes through a 0,22µm filter and drop-by-drop contacts with the gold(III) solution. The addition is performed under stirring (400-500 rpm). The effluent is added until the mixture has a ratio between sulfide and gold(III) of 1.5.
As soon as the effluent contacts with the gold(III) solution, the formation of a brown color precipitate can be observed.
After the addition of the bioreactor's effluent samples were collected over time and several parameters such as pH, redox potential, sulfide and gold(III) concentration in solution were measured.
The pH of the mixture, when the gold(III) solution of 100 mg/L of Au(III) was used, decreased from 6.44 to 2.36 and the redox potential increased. The solution remained with residual sulfide (about 20 mg/L). In this assay, 76% of gold(III) was removed from the solution, corresponding to approximately 76 mg/L of gold(III). In the assay in which the gold(III) solution of 200 mg/L of Au(III) was used, the pH decreased from 6.83 to 2.52 and the redox potential also increased. The solution remained with residual sulfide (about 37 mg/L). In this assay, all gold(III) was removed from the solution (100%), corresponding to approximately 200 mg/L of gold(III).

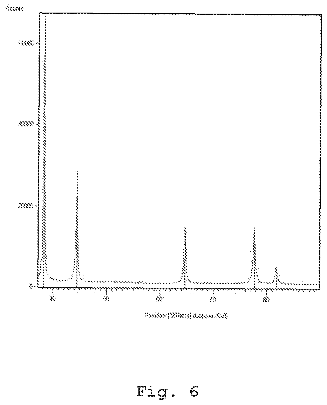

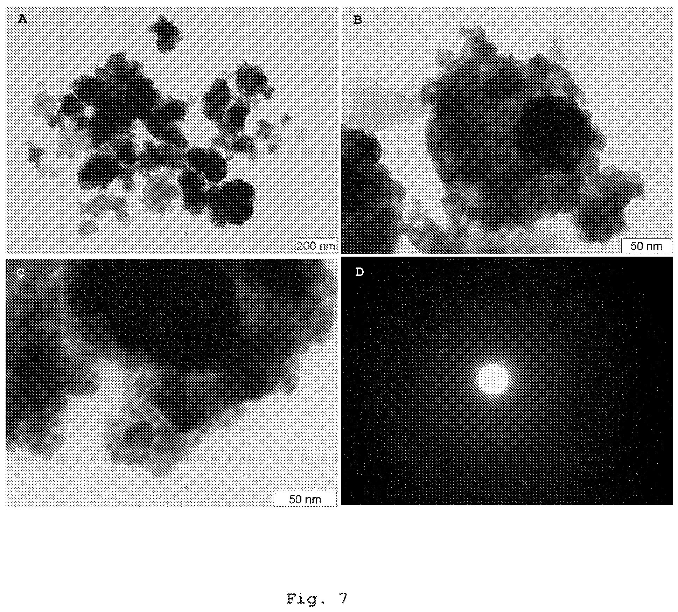

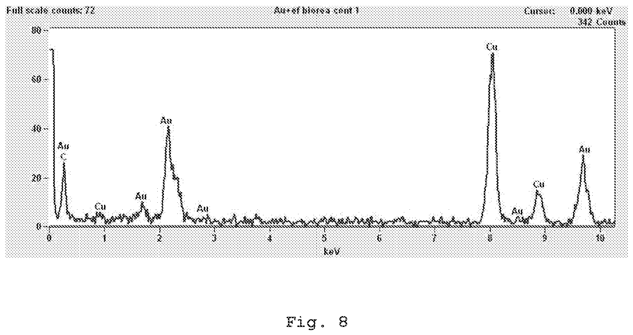

In both assays, a significant decrease (higher than 70%) of the sulfide concentration in the mixture was also observed, which is consistent with its role as reducing agent. As happened in the *batch* assay, the decrease in the sulfide concentration is an additional advantage from an environmental point of view because it is s toxic, flammable and irritating.
The precipitate obtained was analyzed by XRD and TEM coupled to an EDX detector (TEM-EDX).
The XRD results indicate that the precipitate is compatible with Au(0) with a cubic structure (JCPDS #01-071-4615), as shown in Figure 6.
According to the TEM results, figure 7, the particles have spherical morphology with dimensions between 6-10 nm and hexagonal morphology with larger dimensions between 30-80 nm, confirming the formation of Au(0) nanoparticles. In addition, according to the results, the particles are agglomerated. The SAED results confirm that the particles are crystalline (figure 7-D), thus corroborating the XRD results. The presence of Au in the particles was confirmed by EDX analysis, figure 8, likewise in the *batch* assays. Cu from the supporting grid was also identified. No other elements were identified, which is consistent with the presence of Au(0) and with the presence of particles with high purity.
This assay demonstrates the ability of the bioreactor's effluent to reduce Au(III) present in aqueous solution, in continuous, forming Au(0) NPs.

The present request demonstrates the ability of an effluent from a SRB bioremediation process for AMD treatment, containing sulfide in excess (up to approximately 400 mg/L) to remove gold(III) from the solution, reducing it and allowing its recovery as Au(0) NPs.

This process, using a bioreactor's effluent, is able to replace chemical processes using reagents such as NaBH₄, citrate and ascorbate (Binupriya et al., 2010) for the same purpose.

Moreover, taking into account that the process is based on the utilization of an effluent, it will certainly be more advantageous from environmental and economic points of view.

### References

Ahmad A., Mukherjee P., Senapati S., Mandal D., Khan M.I., Kumar R., Sastry M. (2003) Extracellular biosynthesis of silver nanoparticles using the fungus Fusarium oxysporum. Colloids Surface B: Biointerfaces, 28, 313-318.
Bhainsa K.C., Souza S.F.D. (2006) Extracellular biosynthesis of silver nanoparticles using the fungus Aspergillus fumigatus. Colloids and Surfaces B: Biointerfaces, 47, 160-164.
Binupriya A.R., Sathishkumar M., Vijayaraghavan K., Yun S.-I. (2010) Bioreduction of trivalent aurum to nano-crystalline gold particles by active and inactive cells and cell-free extract of Aspergillus oryzae var. viridis. Journal of Hazardous Materials, 177, 539-545.
Bratcova, S., Groudev, S., Giorgiev, P. (2002) The effect of some environmental factors on the microbial dissimilatory sulphate reduction. Mining and Mineral Processing, 44-45, 123-127.
Cabrera, G., Perez, R., Gómez, J.M., Ábalos, A., Cantero D. (2006) Toxic effects of dissolved heavy metals on Desulfovibrio vulgaris and Desulfovibrio sp. Strains. Journal of Hazardous Materials, A135, 40-46.
Cai F., Li J., Sun J., Ji Y. (2011) Biosynthesis of gold nanoparticles by biosorption using Magnetospirillum gryphiswaldense MSR-1. Chemical Engineering Journal, 175, 70-75.
Chatterjee, J., Dasgupta, S. (2005) Visible light induced photocatalytic degradation of organic pollutants. Journal of Photochemistry and Photobiology C:Photochemistry Reviews, 6, 186-205.
Costa, M.C. and Duarte, J.C. (2005) Bioremediation of acid mine drainage using acidic soil and organic wastes for promoting sulphate-reducing bacteria activity on a column reactor. Water, Air and Soil Pollution, 165, 325-345.
Das, N. (2010) Recovery of precious metals through biosorption - A review. Hydrometallurgy, 103, 180-189.
Diels, L. van der Lelie, N., Bastiaens, L. (2002) New developments in treatment of heavy metals contaminated soils. Re/V. Environ. Sci. Bio/Technol., 1, 75-82.
He S.Y., Guo Z.R., Zhang Y., Zhang S., Wang J., Gu N. (2007) Biosynthesis of gold nanoparticles using the bacteria Rhodopseudomonas capsulate. Materials Letters, 61, 3984-3987.
Martins, M., Santos, E.S., Pires, C., Barros, R.J., Costa, M.C. (2010) Production of irrigation water from bioremediation of acid mine drainage: comparing the performance of two representative systems. Journal of Cleaner Production, 18, 248-253.
Mata Y.N., Torres E., Blázquez M.L., Ballester A., Gonzalez F., Muñoz J.A. (2009) Gold(III) biosorption and bioreduction with the brown alga Fucus vesiculosus. Journal of Hazardous Materials, 166, 612-618.
Postgate, J.R. (1981) The sulphate-reducing bacteria. (eds) Cambridge University Press, Cambridge, New York.
Sathishkumar M., Sneha K., Kwak I.S., Mao J., Tripathy S.J., Yun Y.-S. (2009a) Phyto-crystallization of palladium through reduction process using Cinnamon zeylanicum bark extract. Journal of Hazardous Materials, 171, 400-404.
Sathishkumar M., Sneha K., Won S.W., Cho C.-W., Kim S., Yun Y.-S. (2009b) Cinnamon zeylanicum bark extract and powder mediated green synthesis of nano-crystalline silver particles and its bactericidal activity. Colloids Surface B: Biointerfaces, 73, 332-338.
Senapati S., Ahmad A., Khan M.I., Sastry M., Kumar R. (2005) Extracellular biosynthesis of bimetallic Au-Ag alloy nanoparticles. Small, 1, 517-520.
Shahverdi R., Minaeian S., Shahverdi H.R., Jamalifar H., Nohi A. (2007) Rapid synthesis of silver nanoparticles using culture supernatants of Enterobacteria: a novel biological approach. Process Biochemistry, 42, 919-923.
Shankar S.S., Ahmad A., Sastry M. (2003) Geranium leaf assisted biosynthesis of silver nanoparticles. Biotechnology Progress, 19, 1627-1631.
Shankar S.S., Rai A., Ahmad A., Sastry M. (2005) Controlling the optical properties of lemongrass extract synthesized gold nanotriangles and potential application in infrared-absorbing optical coatings. Chemistry of Materials, 17, 566-572.
Singaravelu G., Arockiamary J.S., Kumar V.G., Govindaraju K. (2007) A novel extracelular synthesis of monodisperse gold nanoparticles using marine alga, Sargassum wightii Greville. Colloids Surface B: Biointerfaces, 57, 97-101.
U.S. Patent document n° 6,852,305 B2, 2/2005, Buisman and Dijkman.
Vitor G., Palma T.C., Vieira B., Lourenço J.P., Barros R.J., Costa M.C. (2015) Start-up, adjustment and long-term performance of a two-stage bioremediation process, treating real acid mine drainage, coupled with biosynthesis of ZnS nanoparticles and ZnS/TiO2 nanocomposites. Minerals Engineering, 75, 85-93.

## Claims

1. Process for the production of metallic gold nanoparticles (NPs) using a sulfide-rich effluent from the bioremediation of acid mine drainage (AMD) with sulfate-reducing bacteria (SRB), comprising the following steps:
- effluent's filtration with a 0.22 µm filter;
- effluent's addition, drop by drop and under stirring, to an Au(III) aqueous solution with a concentration of 20-250 mg/L;
- removal of Au(0) NPs as a precipitate, followed by washing and drying.

2. Process for the production of metallic gold nanoparticles according to claim 1, in which an aqueous solution containing 20-250 mg/L of Au(III) is added drop by drop and under stirring to the effluent.

3. Process for the production of metallic gold nanoparticles according to the previous claims, wherein the effluent's addition to the aqueous solution containing Au(III) or the addition of the solution containing Au(III) to the effluent occurs in *batch* or in continuous.

4. Process for the production of metallic gold nanoparticles, according to the previous claim, in which the continuous system is coupled to the bioremediation process, wherein the bioreactor effluent is added drop by drop at a constant flow to the aqueous solution containing Au(III) placed under stirring in a reactor downstream to the bioremediation process.

5. Process for the production of metallic gold nanoparticles according to the previous claims, wherein the effluent is added to the Au(III) aqueous solution until an excess of sulfide, in comparison to the metal ion, can be enough to guarantee complete reduction of Au(III) to Au(0).

## Patentansprüche

1. Verfahren für die Herstellung von metallischen Goldnanopartikeln (NPs) durch Anwendung von sulfidreichem Abwasser aus der Bioremediation vom Säureminenabfluss (AMD) mit sulfatreduzierender Bakterien (SRB) umfassend die folgenden Schritte:
- Filtration des Abwassers mit einem 0.22 µm-Filter;
- Abflusszusatz, Tropfen für Tropfen und unter Rühren, zu einer AU (III)-wässrigen Lösung mit einer Konzentration von 20-250 mg/ L;
- Entfernung von Au (0)-NPs als Ablagerung, gefolgt von Waschen und Trocknen.

2. Verfahren für die Herstellung von metallischen Goldnanopartikeln gemäß Anspruch 1, in dem eine wässrige Lösung beinhaltend 20-250 mg/L von Au (III) Tropfen für Tropfen und unter Rühren dem Abwasser hinzugefügt wird.

3. Verfahren für die Herstellung von metallischen Goldnanopartikeln gemäß der vorigen Ansprüche, wobei der Abwasserzusatz zur wässrigen Lösung beinhaltend Au (III) oder der Zusatz der Lösung beinhaltend Au (III) zum Abwasser schubweise oder laufend vorkommt.

4. Verfahren für die Herstellung von metallischen Goldnanopartikeln gemäß der vorigen Ansprüche, in dem das laufende System an das Bioremediationsverfahren gekuppelt ist, wobei der Bioreaktor-Abwasser Tropfen für Tropfen in laufendem Fluss zur wässrigen Lösung beinhaltend Au (III) hinzugefügt wird gestellt unter Rühren in ein Reaktor stromabwärts zum Bioremediationsverfahren.

5. Verfahren für die Herstellung von metallischen Goldnanopartikeln gemäß der vorigen Ansprüche, wobei das Abwasser der Au (III)-wässrigen Lösung hinzugefügt wird, im Vergleich zum Metallion, bis ein überschüssiges Sulfid genug ist, um komplette Verminderung von AU (III) zu AU (O) zu gewährleisten.

## Revendications

1. Processus de production de nanoparticules (NPs) métalliques d'or, en utilisant un effluent riche en sulfure de la bioremédiation du drainage minier acide (DMA) avec des bactéries réductrices de sulfate (BRS), comprenant les étapes suivantes :
- Filtrage de l'effluent à l'aide d'un filtre de 0,22 µm ;
- Ajout d'effluent, goutte à goutte et sous agitation, à une solution aqueuse Au(III) avec une concentration de 20-250 mg/L ;
- Retrait de NPs Au(0) comme sédiment, suivi d'un lavage et d'un séchage.

2. Processus de production de nanoparticules métalliques d'or selon la revendication 1, dans lequel une solution aqueuse contenant 20-250 mg/L de Au(III) est ajoutée, goutte à goutte et sous agitation, à l'effluent.

3. Processus de production de nanoparticules métalliques d'or selon les revendications précédentes, où l'ajout d'effluent à la solution aqueuse contenant de l'Au(III) ou l'ajout de la solution contenant l'Au(III) à l'effluent a lieu par lot ou en continu.

4. Processus de production de nanoparticules métalliques d'or, selon la revendication précédente, dans lequel le système continu est couplé au processus de bioremédiation, où l'effluent du bioréacteur est ajouté, goutte à goutte, à un débit constant à la solution aqueuse contenant de l'Au(III), placée sous agitation dans un réacteur, en aval du processus de bioremédiation.

5. Processus de production de nanoparticules métalliques d'or selon les revendications précédentes, où l'effluent est ajouté à la solution aqueuse Au(III) jusqu'à ce qu'un excès de sulfure, comparé à l'ion métallique, soit suffisant pour garantir une réduction complète d'Au(III) à l'Au(O).
